Europäisches Patentamt

European Patent Office

Office européen des brevets

(19)

(11) EP 0 972 969 A1

(12) DEMANDE DE BREVET EUROPEEN

(43) Date de publication:
19.01.2000 Bulletin 2000/03

(51) Int Cl.⁷: F16H 1/32

(21) Numéro de dépôt: 99420164.8

(22) Date de dépôt: 15.07.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 17.07.1998 FR 9809342

(71) Demandeur: Draf (Sarl)
42480 La Fouillouse (FR)

(72) Inventeurs:
• Desgardin, Gilbert
38210 Tullins (FR)
• Desgardin, Marcel
38080 L'ile D'abeau (FR)
• Rey, Daniel
42390 Villars (FR)
• Rey, Denise
42390 Villars (FR)

(74) Mandataire: Dupuis, François et al
Cabinet Laurent et Charras,
3 Place de l'Hôtel-de-Ville,
BP 203
42005 St. Etienne Cédex 1 (FR)

(54) **Dispositif mécanique de modification de vitesses entre deux arbres coaxiaux**

(57)    Ce dispositif mécanique de modification de vitesses entre deux arbres coaxiaux (1 et 2), est remarquable en ce que:

• l'un des arbres (1) est solidaire d'un excentrique (1a) sur lequel tourillonne un pignon satellite (9) engrenant avec la denture d'une couronne (10) selon une trajectoire hypocycloïdale

• ledit satellite (9) est relié à l'autre arbre (2) par l'intermédiaire d'un joint homocinétique (12)

• une masselotte (11) est rendue solidaire de l'excentrique (1a) pour équilibrer le balourd généré par la giration du satellite (9)

FIG.1

EP 0 972 969 A1

**Description**

L'invention se rattache au secteur technique des réducteurs de vitesses du type à engrenages.

Le problème que se propose de résoudre l'invention, est de combler la carence de réductions existant entre les réductions modestes susceptibles d'être obtenues par un système planétaire unique et les réductions importantes susceptibles d'être obtenues par d'autres systèmes faisant appel, soit à plusieurs trains en série, soit à des techniques différentielles complexes.

Dans un train planétaire classique à trois satellites, il n'y a jamais plus de trois dents en prise entre chaque satellite et la couronne, soit au maximum neuf dents pour un train à trois satellites, à condition que chaque satellite soit effectivement en contact avec la couronne, ce qui, du point de vue mécanique, est très difficile à assurer, sauf à faire appel à des artifices de fabrication.

Il est donc pratiquement impossible dans un train planétaire classique à trois satellites, d'assurer à la fois le contact de toutes les dents en position d'entraînement, tant des satellites sur la couronne que du planétaire sur les satellites. Pour tenter de remédier à cet inconvénient, on utilise généralement une couronne secondaire ou un planétaire secondaire agissant à contre flan des dentures des satellites.

On observe également que les inévitables défauts liés aux irrégularités de taillage des dents tendent à s'amplifier dans les trains planétaires à trois satellites, notamment lorsque le nombre de dents de la couronne est un multiple exact du nombre de dents des satellites, lesquels s'usent d'autant plus vite par rapport à la couronne que leur nombre de dents est plus petit.

L'invention s'est fixée pour but de remédier à ces inconvénients, de manière simple, sûre, efficace et rationnelle.

Le problème que se propose de résoudre l'invention est d'obtenir une réduction (ou une multiplication) de vitesses entre deux arbres coaxiaux du type de celle généralement obtenue au moyen d'un train planétaire classique à trois satellites, afin d'obtenir un large éventail de réductions (ou de multiplications), en n'utilisant qu'un seul engrènement de deux éléments dentés se conjuguant selon le principe d'un train hypocycloïdal.

Pour résoudre un tel problème, il a été conçu et mis au point un dispositif mécanique de modification de vitesses entre deux arbres coaxiaux, l'un des arbres est solidaire d'un excentrique sur lequel tourillonne un pignon satellite engrenant avec la denture d'une couronne selon une trajectoire hypocycloïdale, ledit satellite étant relié à l'autre arbre par l'intermédiaire d'un joint homocinétique.

Compte tenu de ces dispositions, il en résulte que le satellite est le siège de deux mouvements conjoints, à savoir :

- un mouvement de giration en parcourant la couronne fixe suivant une trajectoire hypocycloïdale sous la pulsion de l'excentrique,
- un mouvement de rotation en tournant sur lui même, compte tenu du décalage de position angulaire résultant de son nombre de dents inférieur à celui de la couronne.

A partir de cette conception de base, différentes caractéristiques techniques peuvent être mises en avant, pour obtenir différents effets et résultats techniques.

Par exemple le dispositif est parfaitement réversible, ainsi :

- soit l'arbre solidaire de l'excentrique est porteur de la vitesse motrice et constitue l'arbre d'entrée tandis que l'autre arbre reçoit la vitesse réduite et constitue l'arbre de sortie, de sorte que l'ensemble du dispositif fait office de réducteur de vitesses ;
- soit l'arbre solidaire de l'excentrique est porteur de la multiplication de vitesse sous couple réduit et constitue l'arbre de sortie tandis que l'autre arbre est porteur de la puissance motrice à fort couple et faible vitesse, et constitue l'arbre d'entrée, de sorte que l'ensemble du dispositif fait office de multiplicateur de vitesses.

De même, la couronne peut être assujettie à des moyens pour être rendue mobile, sa rotation s'ajoutant, ou se retranchant, selon le sens, à cette réduction ou à cette multiplication.

Pour résoudre le problème posé d'équilibrer le balourd généré par la giration du satellite, une masselotte est rendue solidaire de l'excentrique.

Selon d'autres caractéristiques, l'élément récepteur de la vitesse réduite peut être constitué :

- soit par un carter porteur de la couronne de réaction,
- soit par l'arbre récepteur de la rotation du satellite via le joint homocinétique,

Compte tenu de l'ensemble de ces dispositions, il en résulte que l'usure du satellite et de la couronne est très sensiblement la même. On observe également que l'engrènement entre le satellite et la couronne est très progressif, étant réparti sur un angle plus important, et annule ainsi les chocs couramment constatés dans les engrènements entre des petits satellites et une grande couronne.

L'invention est exposée ci-après plus en détail à l'aide des figures des dessins annexés dans lesquels :

- la figure 1 est une vue en coupe longitudinale d'une forme de réalisation du dispositif de réduction de vitesses selon les caractéristiques de l'invention.
- la figure 2 est une vue en coupe transversale considérée selon la ligne 2.2 de la figure 1.
- la figure 3 est une vue en coupe transversale considérée selon la ligne 3.3 de la figure 1.

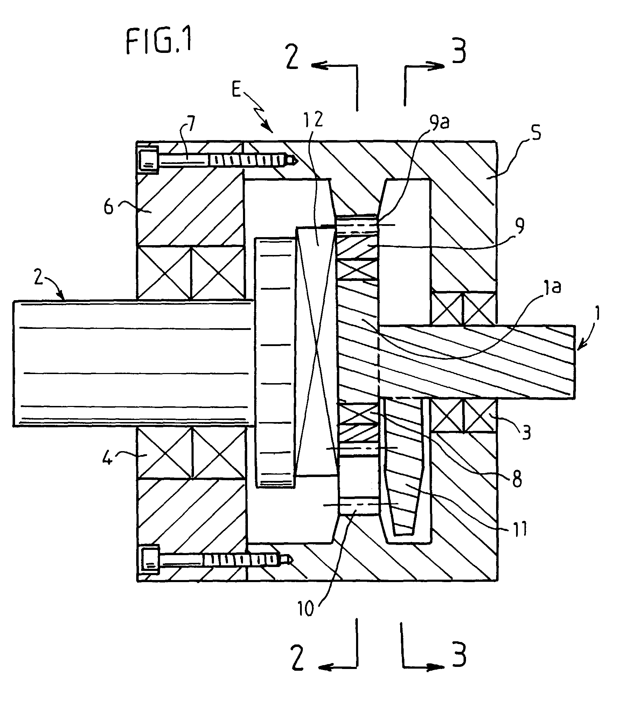

L'exemple de montage illustré figure 1 est donné à titre indicatif nullement limitatif.

Le dispositif comprend deux arbres coaxiaux (1) et (2) montés tournant au moyen, par exemple, de roulements (3) et (4) dans un ensemble (E) constitué d'un carter (5) et d'un flasque (6) solidaire dudit carter (5), par tout moyen connu et approprié, tel que vis (7). L'arbre (1) constitue l'arbre d'entrée et est agencé pour être accouplé à un élément moteur non représenté.

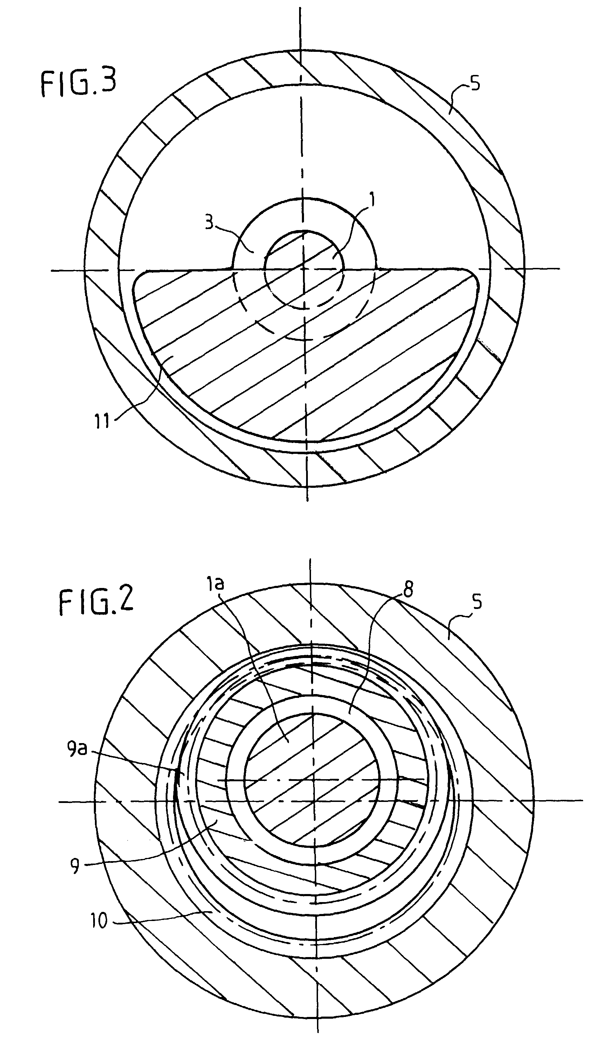

L'arbre d'entrée (1) est solidaire directement ou d'une manière rapportée, à son extrémité libre, opposée à son extrémité d'accouplement avec l'élément moteur, d'un excentrique (la) (figure 2). Sur l'excentrique (la) est monté tournant au moyen d'un roulement (8), un pignon denté (9) faisant office de satellite. La denture externe (9a) du satellite d'entrée (9), engrène avec une couronne dentée (10), solidaire de l'intérieur du carter (5). L'arbre moteur d'entrée (1) est solidaire d'une masselotte d'équilibrage (11) (figure 3).

L'arbre (2) qui constitue l'arbre de sortie destiné à délivrer la réduction souhaitée, est accouplé au satellite d'entrée (9), au moyen d'une liaison homocinétique (12) de tout type connu et approprié.

Compte tenu de ces caractéristiques, le dispositif permet un très large éventail de réduction, en n'utilisant qu'un seul engrènement des deux éléments dentés constitués par le satellite d'entrée (9) et la couronne (10), se conjuguant selon le principe d'un train hypocycloïdal dans lequel le rapport de réduction est égal au nombre de fois que le satellite d'entrée doit parcourir la couronne (10), avant d'avoir fait un tour sur lui même. Le satellite d'entrée (1a) est donc le siège de deux mouvements conjoints :

- un mouvement de giration, en parcourant la couronne dentée (10) suivant une trajectoire hypocycloïdale sous la pulsion de l'excentrique (1a),
- un mouvement de rotation en tournant sur lui même du fait du décalage de position angulaire, auquel l'astreint son nombre de dents inférieur à celui de la couronne.

Si ZSE est le nombre de dents du satellite d'entrée (9) et ZCF le nombre de dents de la couronne (10), la formule de réduction RD est :

$$RD = \frac{ZSE}{ZCF - ZSE}$$

Le sens de rotation du satellite d'entrée est inverse de celui de l'arbre d'entrée (1).

Il en résulte que la réduction se trouve au niveau du satellite d'entrée (9) dont l'axe de rotation est décalé par rapport à l'axe longitudinal (XX') de l'ensemble (E) et se déplace sur le cercle de ce décalage à la vitesse de rotation de l'arbre d'entrée (1). Comme indiqué, la réduction est transmise au niveau de l'arbre de sortie (2), en combinaison avec l'élément de transmission homocinétique (12) à débattement radial entre le satellite d'entrée (9) et ledit arbre de sortie (2).

Compte tenu de ces dispositions, le montage précité est limité seulement par deux paramètres extrêmes qui sont :

- le nombre de dents maximum que peut avoir le satellite d'entrée (9) par rapport à la couronne (10), sans provoquer d'interférences d'engrènements
- le nombre de dents minimum que peut avoir le satellite d'entrée (9) par rapport à la couronne sans provoquer un décalage inacceptable de l'élément de transmission homocinétique (12).

On renvoie au tableau ci-après donné à titre indicatif nullement limitatif qui donne quelques exemples de montages classiques et les réductions obtenues. Dans ce tableau :

- ZSE est le nombre de dents du satellite d'entrée,

- ZCF est le nombre de dents de la couronne,

- M est le module,

- DP est le diamètre primitif de la couronne, en millimètres

- R est la réduction,

- D est le décalage, exprimé en millimètres

- ZSE/ZCF est le nombre de dents en contact entre le satellite d'entrée et la couronne.

| ZSE | ZCF | M | DP | R | D | ZSE/ZCF |
|-----|-----|-----|------|-------|-----|-----------|
| 96 | 100 | 1 | 100 | 24 | 2 | environ 9 |
| 95 | 100 | 1 | 100 | 19 | 2,5 | environ 9 |
| 94 | 100 | 1 | 100 | 15,6 | 3 | environ 9 |
| 93 | 100 | 1 | 100 | 13,3 | 3,5 | environ 9 |
| 92 | 100 | 1 | 100 | 11,5 | 4 | environ 9 |
| 91 | 100 | 1 | 100 | 10,1 | 4,5 | environ 9 |
| 90 | 100 | 1 | 100 | 9 | 5 | environ 9 |
| | | | | | | |
| 97 | 101 | 1 | 101 | 24,25 | 2 | 9 |
| 98 | 102 | 1 | 102 | 24,50 | 2 | 9 |
| 99 | 103 | 1 | 103 | 24,75 | 2 | 10 |
| 100 | 104 | 1 | 104 | 25 | 2 | 10 |
| | | | | | | |
| 196 | 200 | 0,5 | 100 | 49 | 1 | 19 |
| 329 | 333 | 0,3 | 99,9 | 82,25 | 0,6 | 32 |

Il ressort de ce tableau les résultats techniques avantageux suivant :

- le dispositif comble la carence de réduction existant entre les réductions modestes susceptibles d'être obtenues par un train planétaire unique (pas plus de 8) et les réductions plus importantes qu'offrent d'autres systèmes faisant appel soit à plusieurs trains en série, soit à des techniques différentielles complexes,
- le nombre de dents en prises est généralement plus grand que celui d'un train planétaire classique à trois satellites, dans lequel il n'y a jamais plus de trois dents en prise entre chaque satellite et la couronne, soit au maximum 9 dents pour un train à trois satellites, à condition que chacun d'eux soit effectivement en contact avec la couronne, ce qui, du point de vue mécanique, est très difficile à obtenir.
- selon l'invention, le satellite d'entrée ayant toujours un nombre de dents très légèrement inférieur à celui de la couronne, il faut un nombre de tours égal à la réduction avant qu'une dent du satellite d'entrée conjugue à nouveau le même creux de la couronne.

Il en résulte que l'usure du satellite d'entrée est sensiblement la même que celle de la couronne, tandis que l'engrènement entre ledit satellite et ladite couronne est très progressif, en étant réparti sur un angle plus important ce qui annule les chocs couramment constatés dans les engrènements de petits satellites sur une grande couronne.
On observe également de manière particulièrement importante, que selon l'invention, il est tout à fait possible d'obtenir mécaniquement un engrènement sans jeu entre le seul satellite d'entrée et sa couronne en caractérisant avec exactitude le décalage résultant de leur étroite conjugaison et en adaptant précisément un excentrique à ce décalage. Cette opération peut en outre être effectuée après une courte période de rodage.
Si l'on considère la précision actuelle des machines outils à commande numérique atteignant des valeurs inférieures à 0,1 mm, le jeu d'engrènement entraîné par une insuffisance d'excentration de cet ordre, représente quelquess d'arcs.

On observe également que le dispositif est réversible, les fonctions arbre de sortie et arbre d'entrée pouvant parfaitement être échangées. De même, le carter (5) et par conséquent la couronne (10), peuvent être assujettis à un organe moteur de sorte que ladite couronne (10) n'est plus fixe mais mobile en rotation, laquelle rotation s'ajoute ou se retranche, selon le sens, à celle de l'arbre de sortie.

Parmi les principaux avantages résultant des caractéristiques de l'invention, on peut citer :

- le nombre de pièces en mouvement ne change pas, quelle que soit la réduction,
- les dimensions des pièces en mouvement restent du même ordre quelle que soit la réduction,
- les pièces étant dimensionnées pour un couple donné, ce couple sera toujours disponible indépendamment de la réduction,
- quelle que soit cette réduction, pour un couple de sortie donné, le volume et le poids de l'appareil ne changent pas,
- la vitesse de fonctionnement des équipages mobiles est celle du moteur, indépendamment de la réduction,
- l'usure et l'échauffement, pour un couple de sortie donné, sont donc, eux aussi, indépendants de la réduction,
- toutes les pièces en mouvements, y compris le joint homocinétique, peuvent être équipées d'éléments roulants. Le rendement est donc excellent,
- il en découle la possibilité d'utiliser l'appareil « en multiplication de vitesse » simplement en échangeant les fonctions « entrée et sortie », l'arbre de sortie devenant, l'arbre d'entrée, lui, porteur de la puissance motrice à fort couple et faible vitesse, l'arbre d'entrée devenant l'arbre de sortie porteur de la multiplication de vitesse sous couple réduit,
- il est à noter qu'entre les fonctions « totalement réductrice » et « totalement multiplicatrice », il existe une fonction « variation de réduction ou de multiplication » en rendant conditionnellement mobile la couronne fixe, sa rotation s'ajoutant ou se retranchant, selon son sens, à cette réduction ou cette multiplication,
- en rendant fixe l'arbre de sortie et en récupérant par contre-couple la rotation de sortie sur le corps de l'appareil, on obtient un tambour rotatif propre par exemple, à l'enroulement de câbles de treuils,
- enfin, la constitution des appareils nés de cette invention autorisera la présence d'un canal traversant intégralement l'axe longitudinal.

Parmi les applications particulièrement visées on peut citer à titre indicatif, nullement limitatif :

- la traction lente (tracteurs, ponts roulants, treuils, fauteuils d'handicapés...),
- la robotique de par la précision d'engrènement et la grande rigidité liée au nombre réduit de pièces en mouvement,
- les asservissements de position, pour les mêmes raisons et de part la faible inertie dynamique en résultant,
- les zooms de caméras, la douceur d'engrènement étant un gage de discrétion sonore,
- les matériels astronautiques embarqués, compte tenu de la compacité et du faible poids résultant du peu de pièces constitutives et la fiabilité qui en découle.

**Revendications**

1. Dispositif mécanique de modification de vitesses entre deux arbres coaxiaux (1 et 2), caractérisé en ce que :

   • l'un des arbres (1) est solidaire d'un excentrique (la) sur lequel tourillonne un pignon satellite (9) engrenant avec la denture d'une couronne (10) selon une trajectoire hypocycloïdale
   • ledit satellite (9) est relié à l'autre arbre (2) par l'intermédiaire d'un joint homocinétique (12).
   • une masselotte (15) est rendue solidaire de l'excentrique (la) pour équilibrer le balourd généré par la giration du satellite (9)

2. Dispositif selon la revendication 1, caractérisé en ce que l'arbre solidaire (1) de l'excentrique (la) est porteur de la vitesse motrice et constitue l'arbre d'entrée tandis que l'autre arbre (2) reçoit la vitesse réduite et constitue l'arbre de sortie, de sorte que l'ensemble du dispositif fait office de réducteur de vitesses.

3. Dispositif selon la revendication 1, caractérisé en ce que l'arbre (1) solidaire de l'excentrique (la) est porteur de la multiplication de vitesses sous couple réduit et constitue l'arbre de sortie tandis que l'autre arbre est porteur de la puissance motrice à fort couple et faible vitesse, et constitue l'arbre d'entrée, de sorte que l'ensemble du dispositif fait office de multiplicateur de vitesse.

EP 0 972 969 A1

4. Dispositif selon l'une quelconque des revendications 1, 2 et 3, caractérisé en ce que la couronne (10) est assujettie à des moyens pour être rendue mobile, sa rotation s'ajoutant, ou se retranchant, selon le sens, à cette réduction ou cette multiplication.

5. Dispositif selon la revendication 1, caractérisé en ce que l'élément récepteur de la vitesse réduite peut être constitué :

- soit par un carter porteur de la couronne de réaction (10),
- soit par l'arbre récepteur de la rotation du satellite via le joint homocinétique (12),

la vitesse motrice se trouvant sur l'excentrique (1a).

6. Dispositif selon la revendication 1, caractérisé en ce que l'élément récepteur de la vitesse modifiée peut être constitué :

- soit par un carter porteur de la couronne de réaction,
- soit par l'arbre récepteur de la rotation du satellite via le joint homocinétique,

l'arbre porteur de l'excentrique étant bloqué et la modification de vitesse étant dans le rapport simple de la couronne (10) sur le satellite (9).

FIG.1

FIG.3

FIG.2

# EP 0 972 969 A1

**Office européen des brevets**

## RAPPORT DE RECHERCHE EUROPEENNE

Numéro de la demande

EP 99 42 0164

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2 170 733 A (SHARPE) 22 août 1939 (1939-08-22) * page 1, colonne 1, ligne 25 - page 2, colonne 2, ligne 4 * * page 3, colonne 1, ligne 3 - ligne 66; figures 3,7 * --- | 1-6 | F16H1/32 |
| A | US 3 307 434 A (KOPE) 7 mars 1967 (1967-03-07) * colonne 3, ligne 65 - colonne 4, ligne 44; figures 1,2 * --- | 1-5 | |
| A | HERBERT W. MÜLLER: "DIE UMLAUFGETRIEBE" 1971 , SPRINGER VERLAG , BERLIN, GERMANY XP002099654 * page 17 - page 21; figure 29B * ----- | 1-3,5,6 | |

**DOMAINES TECHNIQUES RECHERCHES (Int.Cl.7)**

F16H

Le présent rapport a été établi pour toutes les revendications

| Lieu de la recherche | Date d'achèvement de la recherche | Examinateur |
|---|---|---|
| BERLIN | 3 novembre 1999 | Hunt, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 99 42 0164

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-11-1999

| Document brevet cité au rapport de recherche | Date de publication | Membre(s) de la famille de brevet(s) | Date de publication |
|---|---|---|---|
| US 2170733    A | 22-08-1939 | AUCUN | |
| US 3307434    A | 07-03-1967 | AUCUN | |

Pour tout renseignement concernant cette annexe : voir Journal Officiel de l'Office européen des brevets, No.12/82

EPO FORM P0460